# EUROPÄISCHE PATENTSCHRIFT

(11) **EP 1 984 410 B1**
(45) Veröffentlichungstag und Bekanntmachung des Hinweises auf die Patenterteilung: **15.10.2014**
(21) Anmeldenummer: 07703443.7
(22) Anmeldetag: 13.02.2007
(51) Int. Cl.: C08F 220/54, C08F 220/34

(54) **WASSERLÖSLICHE SULFOGRUPPENHALTIGE COPOLYMERE, VERFAHREN ZU DEREN HERSTELLUNG UND IHRE VERWENDUNG**
WATER-SOLUBLE COPOLYMERS CONTAINING SULPHO GROUPS, PROCESS FOR THEIR PREPARATION AND THEIR USE
COPOLYMÈRES HYDROSOLUBLES CONTENANT DES GROUPES SULFO, LEUR PROCÉDÉ DE FABRICATION ET LEUR UTILISATION

(30) Priorität: 15.02.2006 DE 102006007004
(43) Veröffentlichungstag der Anmeldung: 29.10.2008
(73) Patentinhaber: Construction Research & Technology GmbH, 83308 Trostberg (DE)
(72) Erfinder: FRIEDRICH, Stefan, 84518 Garching (DE); SCHINABECK, Michael, 84518 Garching (DE); TSELEBIDIS, Andreas, 83368 Anning (DE); NACHREINER, Michael, 83361 Kienberg (DE)
(74) Vertreter: Dey, Michael
(86) Internationale Anmeldenummer: PCT/EP2007/001249
(87) Internationale Veröffentlichungsnummer: WO 2007/093392

(56) Entgegenhaltungen:
- EP-A1- 0 936 228
- EP-A1- 1 059 316

## Beschreibung

Gegenstand der vorliegenden Erfindung sind sulfogruppenhaltige wasserlösliche Copolymere, Verfahren zu deren Herstellung und ihre Verwendung als Stabilisierer in wässrigen Baustoffsystemen und wasserbasierenden Anstrich- und Beschichtungssystemen.

In der Vergangenheit wurden hochfließfähige Betone wie beispielsweise Selbstverdichtender Beton (Self Compacting Concrete, SCC) entwickelt, die für den Verarbeiter eine Reihe von Vorteilen bieten. Solche Betone müssen nach dem Einfüllen in die Schalung nicht mehr aufwändig verdichtet werden, da sie so fließfähig sind, dass sie die vorgegebene Form selbständig ausfüllen und sich sogar selbst verdichten. Es wird ein sehr dichtes Baustoffgefüge erhalten, das vorteilhaft für die Dauerhaftigkeit des Betons ist. Zudem erhält man mit Selbstverdichtendem Beton sehr glatte Oberflächen, die architektonischen Ansprüchen ohne weiteres genügen.

Um die hohe Fließfähigkeit solcher Betone zu erreichen, werden Hochleistungsfließmittel, meist auf Basis Polycarboxylatether eingesetzt. Durch die hohe Fließfähigkeit solcher Betonmischungen würde es jedoch zur Segregation schwererer Bestandteile und zur Absonderung von Blutwasser auf der Oberfläche kommen. Dies hat negative Auswirkungen auf die Verarbeitbarkeit und die Festkörpereigenschaften der erhärteten Baustoffmischung. Dies wird dadurch verhindert, dass der Feinstoffgehalt von Selbstverdichtendem Beton deutlich höher ist als bei einem Standardbeton und zusätzlich Stabilisierer (auch als Anti-Segregregationsmittel, Anti-Blutmittel oder Viskositätsmodifizierer bezeichnet) zum Einsatz kommen, um diese unerwünschten Effekte zu verhindern.

Dazu können unter anderem wasserlösliche nichtionische Abkömmlinge von Polysacchariden (Cellulose- und Stärkederivate), aber auch mikrobiell erzeugte Polysaccharide wie bspw. Welan Gum in wässrigen Baustoffmischungen verwendet werden.

Verstärkt kommen aber auch synthetische Polymere als Stabilisierer in hoch fließfähigen Betonen zum Einsatz, da sie erhebliche Vorteile gegenüber den Polysaccharidderivaten zeigen (Stabilisierung ohne Beeinträchtigung der Fließfähigkeit, Lagerstabilität, keine Abbindeverzögerung). Solche Polymere auf Basis 2-Acrylamido-2-methylpropansulfonsäure werden bspw. in WO 2005/035 603 A1 und DE 10 2004 032 304 A1 beschrieben. In feinstoffreichen fließfähigen Baustoffsystemen, wie beispielsweise feinstoffreicher Selbstverdichtender Beton, zeigen diese Copolymere sehr gute stabilisierende Eigenschaften (Verhinderung von Bluten und Segregation).

Ebenfalls sulfogruppenhaltige Copolymere, die eine sehr gute stabilisierende Wirkung besitzen, werden in DE 198 06 482 A1 und DE 100 37 629 A1 beschrieben. Allerdings wird beim Einsatz dieser Polymere die plastische Viskosität der Mischung sehr stark heraufgesetzt, so dass die Fließfähigkeit des Baustoffsystems in einem für den Anwender inakzeptablen Maße eingeschränkt wird. Zwar lässt sich durch Zugabe bzw. Erhöhung der Dosierung von Fließmitteln die plastische Viskosität wieder absenken, jedoch sind die zusätzlich anfallenden Kosten für das Fließmittel ein erheblicher wirtschaftlicher Nachteil für den Anwender.

Feinstoffreicher Selbstverdichtender Beton bietet zwar viele Vorteile, hat jedoch auch einen erheblichen Nachteil. Durch den hohen Feinstoffanteil (v. a. Zement) sind die Rohstoffkosten für den Anwender deutlich höher als bei einem Normalbeton. Die Bestrebungen gehen daher dahin, den Feinstoffanteil, speziell den Zementgehalt, deutlich abzusenken, um eine Reduktion der Kosten zu erreichen. Gleichzeitig sollen die vorteilhaften Eigenschaften eines Selbstverdichtenden Betons erhalten bleiben. Durch eine deutliche Reduktion des Feinstoffanteils werden die Anforderungen an die Wirkung des Stabilisierers erheblich erhöht. Je geringer der Feinstoffgehalt der hoch fließfähigen Mischung, desto höher ist die Tendenz zur Segregation der schwereren Bestandteile und zur Absonderung von Blutwasser auf der Oberfläche.

Mit Stabilisierern gemäß dem Stand der Technik lässt sich zwar eine leichte Absenkung des Feinstoffanteils kompensieren, jedoch reicht die stabilisierende Wirkung nicht aus, um beispielsweise einen sehr feinstoffarmen Selbstverdichtenden Beton herzustellen, der hochfließfähig und dennoch homogen ist, d.h. keine Segregation und kein Bluten zeigt.

Der vorliegenden Erfindung lag daher die Aufgabe zugrunde, Copolymere für die Anwendung als Stabilisierer und Rheologiemodifizierer für sehr feinstoffarme wässrige Baustoffsysteme bereitzustellen, welche die genannten Nachteile des Standes der Technik nicht aufweisen. Die Copolymere sollen als Stabilisierer für wässrige fließfähige Baustoffsysteme, die nur einen sehr geringen Gehalt an Feinstoffen besitzen, eine hervorragende stabilisierende Wirkung aufweisen und gleichzeitig die Viskosität des Systems nicht zu stark heraufsetzen, so dass die Verarbeitbarkeit nicht negativ beeinflusst bzw. im Falle von gepumpten Baustoffmischungen der Pumpendruck nicht signifikant erhöht wird.

Darüber hinaus sollten die Zusatzmittel den Baustoffsystemen ausgezeichnete anwendungstechnische Eigenschaften bei der Verarbeitung und im erhärteten bzw. getrockneten Zustand verleihen.

Diese Aufgabe wurde erfindungsgemäß durch die Copolymere entsprechend Anspruch 1 gelöst.

Es hat sich nämlich überraschenderweise gezeigt, dass durch die erfindungsgemäßen Copolymere eine erhebliche Verbesserung der Stabilisierung in sehr feinstoffarmen wässrigen Baustoffsystemen auf der Basis hydraulischer Bindemittel wie Zement, Kalk, Gips, Anhydrit usw. erzielt wird..

Die wasserlöslichen sulfogruppenhaltigen Copolymere entsprechend der vorliegenden Erfindung bestehen aus mindestens drei Baugruppen a), b), c) und/oder d).

Die erste Baugruppe stellt ein sulfogruppenhaltiges substituiertes Acryl- öder Methacrylderivat der Formel (I) dar: 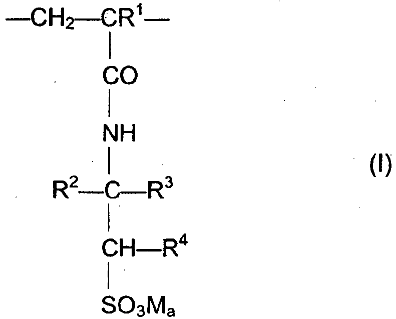 mit
- R¹: = Wasserstoff oder Methyl,
- R², R³, R⁴: = Wasserstoff, aliphatischer Kohlenwasserstoffrest mit 1 bis 6 C-Atomen, ggf. mit Methylgruppen substituierter Phenylrest und
- M: = Wasserstoff, ein- oder zweiwertiges Metallkation, Ammonium bzw. ein organischer Aminrest sowie
- a: = ½ oder 1.

Als ein- oder zweiwertiges Metallkation finden vorzugsweise Natrium-, Kalium-, Calcium- oder Magnesiumionen Verwendung. Als organische Aminreste werden vorzugsweise substituierte Ammoniumgruppen eingesetzt, die sich ableiten von primären, sekundären oder tertiären C₁- bis C₂₀-Alkylaminen, C₁-bis C₂₀-Alkanolaminen, C₅- bis C₈-Cycloalkylaminen und C₆- bis C₁₄-Arylaminen. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin in der protonierten Ammoniumform.

Die Baugruppe a) leitet sich ab von Monomeren wie 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure. Besonders bevorzugt ist 2-Acrylamido-2-methylpropansulfonsäure.

Gegebenenfalls können bis zu 30 % der Baugruppe a) durch weitere sulfonsäuregruppenhaltige Struktureinheiten ersetzt sein, die sich von Methallylsulfonsäure- oder Allylsulfönsäure-Monomeren ableiten.

Die zweite Baugruppe b) entspricht der Formel (II) 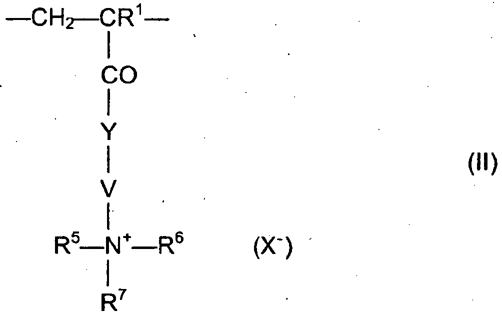 worin
- Y: = O, NH oder NR⁵,
- V: = -(CH₂)ₓ-, 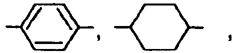
- R⁵ und R⁶: stehen unabhängig voneinander für einen aliphatischen Kohlenwasserstoffrest mit 1 bis 20 C-Atomen, einen cycloaliphatischen Kohlenwasserstoffrest mit 5 bis 8 C-Atomen oder einen Arylrest mit 6 bis 14 C-Atomen. Diese Reste können ggf. mit Hydroxyl-, Carboxyl- oder Sulfonsäuregruppen substituiert sein.
- R⁷: = R⁵ bzw. R⁶,-(CH₂)ₓ-SO₃Mₐ, 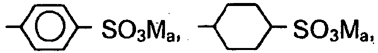
- x: = 1 bis 6,
- X: = Halogen (vorzugsweise Cl, Br), C₁- bis C₄-Alkylsulfat (vorzugsweise Methylsulfat) oder C₁- bis C₄-Alkylsulfonat und
- R¹, M und a: oben genannte Bedeutung besitzen.

Als Monomere, welche die Struktur (II) bilden, kommen vorzugsweise folgende Verbindungen in Frage: [2-(Acryloyloxy)-ethyl]-trimethyl- ammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyl- oxy)-ethyl]-trimethylammonium-chlorid bzw. -methosulfat, [3-(Methacryloylamino)-propyl]-trimethylammoniumchlorid, N-(3-Sulfopropyl)-N-methyacryloxyethyl-N'-N-dimethyl-ammonium-betain, N-(3-Sulfopropyl)-N-methyacrylamidopropyl-N,N-dimethyl-ammonium-betain und 1-(3-Sulfopropyl)-2-vinyl-pyridinium-betain.

Gegebenenfalls können bis zu 5 Mol-% der Baugruppen b) durch weitere kationische Struktureinheiten ersetzt sein, die sich von N,N-Dimethyl-diallyl-ammoniumchlorid und N,N-Diethyl-diallyl-ammoniumchlorid ableiten.

Die dritte Baugruppe c) entspricht der Formel (III) 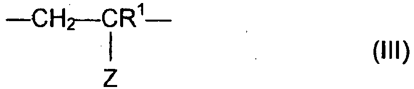 wobei
- Z: = -(CH₂)_{q}-O(CₙH₂ₙO)ₚ-R⁸, -COO(CₙH₂ₙO)ₚ-R⁸
- n: = 2 bis 4
- p: = 1 bis 200
- q: = 0 bis 20
- R⁸: = H, C₁- bis C₄-Alkyl darstellen sowie
R¹ die oben genannte Bedeutung besitzt.

Bevorzugte Monomere, welche die Struktur (III) bilden, sind Allylpolyethylenglykol-(350 bis 2000), Methylpolyethylenglykol-(350 bis 3000)-monovinylether, Polyethylenglykol-(500 bis 5000)-vinyloxy-butylether, Polyethylenglykol-bfock-propylenglykol-(500 bis 5000)-vinyloxy-butylether, Methylpolyethylenglykol-block-propylenglykolallylether, Methylpolyethylenglykol-750-methacrylat, Polyethylenglykol-500-methacrylat, Methylpolyethylenglykol-2000-monovinylether, Methylpolyethylenglykol-block-propylenglykolallylether usw.

Die vierte Baugruppe d) entspricht der Formel (IV) 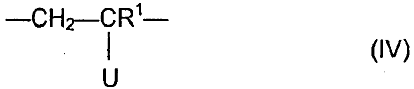 worin
- U: = -COO(CₙH₂ₙO)ₚ-R⁹, -(CH₂)_{q}-O(CₙH₂ₙO)ₚ-R⁹
- R⁹: = 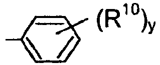 sowie ungesättigter oder gesättigter, linearerer oder verzweigter aliphatischer Alkylrest mit 10 bis 30 C-Atomen,
- R¹⁰: = H, C₁- bis C₆-Alkyl-, Arylalkylgruppe mit C₁- bis C₁₂-Alkyl- und C₆-bis C₁₄ -Arylrest darstellen,
- y: = 1 bis 3 sowie
R¹, n, p und q die oben genannte Bedeutung besitzen.

Bevorzugte Monomere, welche die Struktur (IV) bilden, sind Tristyrylphenolpolyethylenglykol-1100-methacrylat, Behenylpolyethylenglykol-1100-methacrylat, Stearylpolyethylenglykol-1100-methacrylat, Laurylpolyethylenglykol-350-methacrylat, Tristyrylphenol-polyethylenglykol-1100-acrylat, Tristyrylphenol-polyethenglykol-1100-monovinylether, Behenylpolyethenglykol-1100-monovinylether, Stearylpolyethenglykol-1100-monovinylether, Laurylpolyethylenglykol-monovinylether, Tristyrylphenolpolyethylenglykol-1100-vinyloxy-butylether, Behenylpotyethylenglykol-1100-vinyloxy-butylether, Laurylpolyethylenglykol-monoallylether, Tristyrylphenolpolyethylenglykol-block-propylenglykolallylether, Behenylpolyethylenglykolblock-propylenglykolallylether, Stearylpolyethylenglykol-block-propylenglykolallylether usw.

Es ist als erfindungswesentlich anzusehen, dass die Copolymere aus 40 bis 93,89 Mol-% der Baugruppe a), 6 bis 59,89 Mol-% der Baugruppe b), 0,1 bis 10 Mol-% der Baugruppe c) und/oder 0,01 bis 0,5 Mol-% der Baugruppe d) bestehen, so dass sich insgesamt 100 Mol-% ergeben. Vorzugsweise verwendete Copolymere enthalten 50 bis 89,67 Mol-% a), 10 bis 45 Mol-% b) 0,3 bis 5 Mol-% c) und/oder 0,03 bis 0,4 Mol-% d), so dass sich insgesamt 100 Mol-% ergeben.

Es ist im Rahmen der vorliegenden Erfindung möglich, dass die erfindungsgemäßen Copolymere noch bis zu 20 Mol-%, insbesondere bis zu 15 Mol-%, bezogen auf die Summen der Baugruppen a), b), c) und/oder d), eine weitere Baugruppe e) der Formel (V) enthalten, 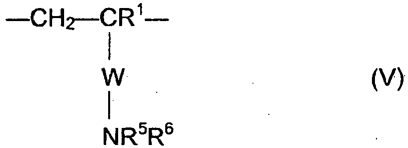 worin
- W: = -CO-O-(CH₂)ₘ-, -CO-NR²-(CH₂)ₘ-
- m: = 1 bis 6 darstellen und
R¹, R², R⁵ und R⁶ die oben genannte Bedeutung besitzen.

Als Monomere, welche die Struktur (V) bilden, kommen vorzugsweise folgende Verbindungen in Frage: [3-(Methacryloylamino)-propyl]-dimethylamin, [3-(Acryloylamino)-propyl]-dimethylamin, [2-(Methacryloyl-oxy)-ethyl]-dimethylamin, [2-(Acryloyl-oxy)-ethyl]-dimethylamin, [2-(Methacryloyl-oxy)-ethyl]-diethylamin, [2-(Acryloyl-oxy)-ethyl]-diethylamin usw.

Es ist im Rahmen der vorliegenden Erfindung weiterhin noch möglich, dass in den erfindungsgemäßen Copolymeren bis zu 30 % der Baugruppe a) durch ein Monomer f) der Formel (VI) ersetzt werden. 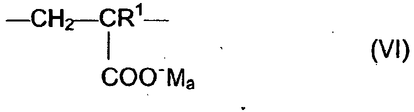 worin R¹, M und a die oben genannte Bedeutung besitzen.

Als Monomere, welche die Struktur (VI) bilden, kommen vorzugsweise folgende Verbindungen in Frage: Acrylsäure, Natriumacrylat, Methacrylsäure, Natriummethacrylat usw.

Gegebenenfalls können die Copolymere zusätzlich durch den Einbau von kleinen Mengen Vernetzer eine leicht verzweigte oder vernetzte Struktur erhalten. Beispiele für solche Vernetzer-Komponenten sind Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat. Diese Verbindungen dürfen nur in solchen Mengen eingesetzt werden, dass immer noch wasserlösliche Copolymere erhalten werden. Generell wird die Konzentration selten über 0,1 Mol-% bezogen auf die Summen der Baugruppen a), b), c), d) und ggf. e) und f) liegen, ein Fachmann kann jedoch leicht die maximal einsetzbare Menge der Vernetzer-Komponente bestimmen.

Die Herstellung der erfindungsgemäßen Copolymere erfolgt in an sich bekannter Weise durch Verknüpfung der die Strukturen a) bis f) bildenden Monomere durch radikalische, ionische oder komplex koordinative Substanz-, Lösungs-, Gel-, Emulsions-, Dispersions- oder Suspensionspolymerisation. Da es sich bei den erfindungsgemäßen Produkten um wasserlösliche Copolymere handelt, ist die Polymerisation in wässriger Phase, die Polymerisation in inverser Emulsion bzw. die Polymerisation in inverser Suspension bevorzugt. In besonders bevorzugten Ausführungsformen erfolgt die Umsetzung als Gelpolymerisation oder Lösungspolymerisation in wässriger Phase.

Geeignete Initiatoren für die radikalische Lösungspolymerisation sind bspw. Natrium-, Kalium- oder Ammoniumperoxodisulfat, 2,2'-Azobis(2-amidinopropan)dihydrochlorid und andere gebräuchliche radikalische Starter. Die Konzentration der radikalischen Initiatoren wird vorzugsweise auf 0,01 g bis 10 g pro 100 g Monomere eingestellt.

Die Polymerisation der Monomere erfolgt bei einer Temperatur zwischen 10 und 100°C über einen bevorzugten Zeitraum zwischen 20 min und 24 h, wobei die Konzentration der wässrigen Lösung bevorzugt auf 5 bis 30 Gew.-% eingestellt wird.

Weitere Hilfsmittel, wie Molekulargewichtsregler, z. B. Thioglykolsäure, Mercaptoethanol, Ameisensäure und Natriumhypophosphit können ebenfalls verwendet werden.

Bei der ebenfalls bevorzugten Gelpolymerisation ist es vorteilhaft, wenn man bei niedrigen Reaktionstemperaturen und mit einem geeigneten Initiatorsystem polymerisiert. Durch die Kombination zweier Initiatorsysteme (Photoinitiatoren und Redoxsystem), die zuerst photochemisch bei niedrigen Temperaturen und anschließend aufgrund der Exothermie der Polymerisation thermisch gestartet werden, kann ein Umsatz von ≥ 99 % erreicht werden.

Sonstige Hilfsmittel, wie Molekulargewichtsregler, z. B. Thioglykolsäure, Mercaptoethanol, Ameisensäure und Natriumhypophosphit können ebenfalls verwendet werden.

Die Aufarbeitung des Gelblocks wird durch die Verwendung eines Trennmittels (z. B. Sitren 595 von der Firma Goldschmidt) erleichtert, welches das Verkleben des Gelgranulats verhindert. Die rieselfähigen Gelteilchen sind dadurch leichter auf ein Trockengitter zu verteilen. Somit wird der Trocknungsprozess vereinfacht und es können sogar die Trockenzeiten verkürzt werden.

Die Gelpolymerisation erfolgt vorzugsweise bei - 5 bis 50 °C, wobei die Konzentration der wässrigen Monomerlösung bevorzugt auf 30 bis 65 Gew.-% eingestellt wird. Zur Durchführung der Polymerisation gemäß einer bevorzugten Ausführungsform wird das sulfogruppenhaltige (Meth-)Acrylderivat in Form seiner handelsüblichen Säureform in Wasser gelöst, durch Zugabe eines Alkalimetallhydroxids neutralisiert, unter Rühren mit weiteren erfindungsgemäß zu verwendenden Monomeren sowie mit Puffern, Molekulargewichtsreglern u. a. Polymerisationshilfsmitteln vermischt. Nach Einstellung des Polymerisations-pH-Wertes, der vorzugsweise zwischen 4 und 9 liegt, erfolgt eine Spülung des Gemisches mit einem Schutzgas wie Helium oder Stickstoff und anschließend die Aufheizung oder Abkühlung auf die entsprechende Polymerisationstemperatur.

Wählt man die ungerührte Gelpolymerisation als Ausführungsform, wird in bevorzugten Schichtdicken von 2 bis 20 cm, insbesondere 8 bis 10 cm polymerisiert. Die Polymerisation wird durch Zugabe des Polymerisationsinitiators und durch Bestrahlung mit UV-Licht bei niedrigen Temperaturen (zwischen - 5 und 10 °C) gestartet. Das Polymer wird nach vollständigem Umsatz der Monomere unter Einsatz eines Trennmittels (z. B. Sitren 595 von der Firma Goldschmidt) zerkleinert, um durch eine größere Oberfläche das Trocknen zu beschleunigen.

Durch die möglichst schonenden Reaktions- und Trocknungsbedingungen können vernetzende Nebenreaktionen vermieden werden, so dass man Polymere erhält, die einen sehr geringen Gelanteil besitzen.

Die Anzahl der sich wiederholenden Strukturelemente in den erfindungsgemäßen Copolymeren ist nicht eingeschränkt und hängt sehr stark vom jeweiligen Anwendungsgebiet ab. Es hat sich allerdings als vorteilhaft erwiesen, die Anzahl der Struktureinheiten so einzustellen, dass die Copolymere ein zahlenmittleres Molekulargewicht von 50.000 bis 10.000.000 aufweisen. Die Copolymere eignen sich hervorragend als Zusatzmittel für wässrige Baustoffsysteme, die hydraulische Bindemittel wie Zement, Kalk, Gips, Anhydrit usw. enthalten. Darüber hinaus sind sie in wasserbasierenden Anstrich- und Beschichtungssystemen anwendbar.

Die erfindungsgemäßen Copolymere besitzen in sehr feinstoffarmen, hochfließfähigen Baustoffsystemen bereits in niedriger Dosierung ausgezeichnete stabilisierende Eigenschaften und verhindern die Abscheidung von Blutwasser an der Oberfläche. Sie verleihen sehr feinstoffarmem Selbstverdichtendem Beton u. a. hervorragende anwendungstechnische Eigenschaften sowohl im Verarbeitungs- als auch im erhärteten bzw. getrockneten Zustand. Aber auch in feinstoffreicheren wässrigen Baustoffsystemen zeigen die erfindungsgemäßen Copolymere ebenfalls in niedriger Dosierung ausgezeichnete stabilisierende Eigenschaften und verhindern die Abscheidung von Blutwasser an der Oberfläche. Sie verleihen selbstverlaufenden Bodenspachtelmassen, Verguss- und Reparaturmörteln, Fließestrichen, Fliessbeton, Selbstverdichtendem Beton, Unterwasserbeton, Unterwassermörtel, pigmenthaltigen Anstrichstoffen u. a. hervorragende anwendungstechnische Eigenschaften sowohl im Verarbeitungs- als auch im erhärteten bzw. getrockneten Zustand.

Durch den Zusatz der Copolymere wird die Viskosität (plastische Viskosität) der Baustoffmischung nicht wesentlich erhöht und die Fließgrenze bleibt nahezu unverändert. Die Verarbeitbarkeit des fließfähigen Baustoffsystems wird somit nicht beeinträchtigt. Außerdem weisen die wässrigen Lösungen der erfindungsgemäßen Copolymere eine sehr gute Lagerstabilität auf.

Die erfindungsgemäßen Copolymere können auch in Kombination mit nichtionischen Polysaccharid-Derivaten wie Methylcellulose (MC), Hydroxyethylcellulose (HEC), Hydroxypropylcellulose (HPC), Methylhydroxyethylcellulose (MHEC), Methylhydroxypropylcellulose (MHPC) sowie Welan Gum oder Diutan Gum eingesetzt werden.

Die bevorzugten Einsatzmengen der erfindungsgemäßen Copolymere liegen in Abhängigkeit von der Verwendungsart zwischen 0,005 und 3 Gew.-% bezogen auf das Trockengewicht des Baustoff-, Anstrich- bzw. Beschichtungssystems.

Die erfindungsgemäßen Copolymere werden im Beton als Zusatzmittel bevorzugt in Form wässriger Lösungen ihrer erfindungsgemäßen Verwendung zugeführt. Die durch Lösungspolymerisation hergestellten Copolymere werden als wässrige Lösungen eingesetzt. Sofern die erfindungsgemäßen Copolymere jedoch durch Gelpolymerisation hergestellt werden, müssen daraus zunächst Lösungen hergestellt werden. Dazu eignen sich besonders die gröberen Granulate mit einem mittleren Teilchendurchmesser zwischen 300 µm und 800 µm, wobei der Anteil an Partikeln mit einem Teilchendurchmesser kleiner 100 µm geringer als 2 Gew.-% ist. Gleiches gilt, wenn die erfindungsgemäßen Copolymere in anderen Betonzusatzmitteln bzw. Formulierungen aus Betonzusatzmitteln aufgelöst werden (z. B. in einem Fließmittel).

Für Trockenmörtelanwendungen (z. B. Zement- oder Anhydrit-Fließestriche) werden die Copolymere in Pulverform ihrer erfindungsgemäßen Verwendung zugeführt. Dazu werden die Polymere getrocknet und fein vermahlen. Dabei ist die Größenverteilung der Teilchen durch Anpassung der Mahlparameter so zu wählen, dass der mittlere Teilchendurchmesser kleiner 100 µm ist und der Anteil an Partikeln mit einem Teilchendurchmesser größer 200 µm kleiner als 2 Gew.-% ist. Bevorzugt sind solche Pulver, deren mittlerer Teilchendurchmesser kleiner 60 µm ist und der Anteil an Partikeln mit einem Teilchendurchmesser größer 120 µm kleiner als 2 Gew.-% ist. Besonders bevorzugt sind solche Pulver, deren mittlerer Teilchendurchmesser kleiner 50 µm ist und der Anteil an Partikeln mit einem Teilchendurchmesser größer 100 µm kleiner als 2 Gew.-% ist.

Die nachfolgenden Beispiele sollen die Erfindung näher erläutern.

### Beispiele

### Copolymer1: Lösungspolymerisation.

Ein 2 I-Reaktionskolben mit einem Intensivkühler, KPG-Rührer, Thermometer und Gaseinleitungsrohr wurde mit 684 ml Wasser gefüllt und eine Stunde mit N₂-Schutzgas gespült. Unter Rühren wurden 9,2 g Natriumhydroxidplätzchen aufgelöst und langsam 47,6 g (0,23 mol, 83,95 Mol-%) 2-Acrylamido-2-methylpropansulfonsäure (I) zugegeben und bis zum Erhalt einer klaren Lösung gerührt. Anschließend wurden 17,2 g (0,04 mol, 15,0 Mol-%) [3-(Methacrylamido)-propyl]-trimethylammoniumchlorid (50 Gew.-%ige Lösung in Wasser) (II) und 0,39 g (0,14 mmol, 0,05 Mol-%) Tristyrylphenolpolyethylenglykol-1100-methacrylat (60 Gew.-%ige Lösung in Wasser) (IV) darin gelöst. Unter Rühren und Kühlen wurden 5 Gew.-%ige wässrige Natronlauge zugesetzt und ein pH-Wert von 7 eingestellt. Anschließend wurden 13,6 g (2,74 mmol, 1,0 Mol-%) Polyethylenglykol-(3000)-vinyloxy-butylether (60 Gew.-%ige Lösung in Wasser) (III) zugegeben und die Mischung auf 80°C aufgeheizt. Durch Zusatz von 0,5 g 2,2'-Azobis(N,N'-dimethylenisobutyramid)dihydrochlorid wurde die Reaktion gestartet. Nach vier Stunden wurde der Reaktionsansatz auf Raumtemperatur abgekühlt. Die erhaltene Lösung von Copolymer 1 weist einen Feststoffgehalt von 10 Gew.-% auf.

### Copolymer 2: Gelpolymerisation

In einem 2 I-Dreihalskolben mit Rührer und Thermometer wurden 580 g Wasser vorgelegt. Unter Rühren wurden 87 g Natriumhydroxidplätzchen aufgelöst und langsam 450 g (2,17 mol, 81 Mol-%) 2-Acrylamido-2-methylpropansulfonsäure (I) zugegeben und bis zum Erhalt einer klaren Lösung gerührt. Nach Zusatz von 0,50 g Citronensäurehydrat wurden unter Rühren und Kühlen 5 Gew.-%ige wässrige Natronlauge zugesetzt und ein pH-Wert von 7 eingestellt. Anschließend wurden nacheinander 155 g (0,45 mol, 17 Mol-%) [3-(Acryloylamino)-propyl]-trimethylammoniumchlorid (60 Gew.-%ige Lösung in Wasser) (II) und 55 g (0,05 mol, 2 Mol-%) Methylpolyethylenglykol-1100-monovinylether (III) zugesetzt. Als Molekulargewichtsregler wurden 50 ppm Ameisensäure zugegeben. Die Lösung wurde mit 20 %iger Natronlauge auf pH = 7 eingestellt, durch 30 minütiges Spülen mit Stickstoff inertisiert und auf ca. 5 °C abgekühlt. Die Lösung wurde in einen Plastikbehälter mit den Maßen (b*t*h) 15 cm *10cm *20 cm umgefüllt und anschließend wurden nacheinander 150 mg 2,2'-Azo-bis-(2-amidinopropan)-dihydrochlorid, 1,0 g 1 %ige Rongalit C-Lösung und 10 g 0,1 %ige tert.-Butylhydroperoxid-Lösung zugesetzt. Die Polymerisation wurde durch Bestrahlen mit UV-Licht (zwei Philips Röhren; Cleo Performance 40 W) gestartet. Nach ca. 2 - 3 h wurde das harte Gel aus dem Plastikbehälter genommen und mit einer Schere in ca. 5 cm* 5 cm* 5 cm große Gelwürfel geschnitten. Bevor die Gelwürfel mittels eines herkömmlichen Fleischwolfs zerkleinert wurden, wurden sie mit dem Trennmittel Sitren 595 (Polydimethylsiloxan-Emulsion; Firma Goldschmidt) eingestrichen. Bei dem Trennmittel handelt es sich um eine Polydimethylsiloxanemulsion, die 1 : 20 mit Wasser verdünnt wurde.

Das erhaltene Gelgranulat von Copolymer 2 wurde gleichmäßig auf Trockengitter verteilt und in einem Umlufttrockenschrank bei ca. 90 - 120 °C im Vakuum bis zur Gewichtskonstanz getrocknet.

Es wurden ca. 625 g eines weißen, harten Granulats erhalten, welches mit Hilfe einer Zentrifugalmühle in einen pulverigen Zustand überführt wurde. Der mittlere Teilchendurchmesser des Polymerpulvers von Copolymer 2 betrug 40 µm und der Anteil an Partikeln mit einem Teilchendurchmesser größer 100 µm war kleiner als 1 Gew.-%.

### Copolymer 3

Entsprechend Copolymer 1 wurde Copolymer 3 aus 83,1 Mol-% 2-Acrylamido-2-methylpropansulfonsäure (I), 15,2 Mol-% [3-(Acryloylamino)-propyl]-trimethylammoniumchlorid (II), 1,5 Mol-% Polyethylenglykol-block-propylenglykol-(1100)-vinyloxy-butylether und 0,2 Mol-% Laurylpolyethylenglykol-1100-methacrylat (IV) hergestellt. Als Molekulargewichtsregler wurden 50 ppm Ameisensäure zugegeben.

### Copolymer 4

Entsprechend Copolymer 1 wurde Copolymer 4 aus 60 Mol-% 2-Acrylamido-2-methylpropansulfonsäure (I), 23 Mol-% [3-(Methacrylamido)-propyl]-trimethylammoniumchlorid (II), 2 Mol-% Methylpolyethylenglykol-750-methacrylat (III) und 15 Mol-% N,N- [3-(Acryloylamino)-propyl]-dimethylamin (V) hergestellt.

### Copolymer 5

Entsprechend Copolymer 2 wurde Copolymer 5 aus 50 Mol-% 2-Acrylamido-2-methylpropansulfonsäure (I), 38,45 Mol-% [3-(Methacrylamido)-propyl]-trimethylammoniumchlorid (II), 1,5 Mol-% Polyethylenglykol-(1100)-vinyloxy-butylether (III), 0,05 Mol-% Tristyrylphenol-polyethylenglykol-1100-methacrylat und 10 Mol-% Acrylsäure (VI) hergestellt. Als Molekulargewichtsregler wurden 350 ppm Ameisensäure zugegeben.

### Copolymer 6

Entsprechend Copolymer 1 wurde Copolymer 6 aus 60 Mol-% 2-Acrylamido-2-methylpropansulfonsäure (I), 25 Mol-% [3-(Acryloylamino)-propyl]-trimethylammoniumchlorid (II), 1 Mol-% Polyethylenglykol-block-propylenglykol-(1100)-vinyloxy-butylether, 0,05 Mol-% Tristyrylphenol-polyethylenglykol-1100-methacrylat (IV) und 13,95 Mol-% N,N- [3-(Acryloylamino)-propyl]-dimethylamin (V) hergestellt. Als Molekulargewichtsregler wurden 20 ppm Ameisensäure zugegeben.

### Copolymer 7

Entsprechend Copolymer 1 wurde Copolymer 7 aus 60,5 Mol-% 2-Acrylamido-2-methylpropansulfonsäure (I), 24 Mol-% [3-(Acryloylamino)-propyl]-trimethylammoniumchlorid (II), 0,5 Mol-% Polyethylenglykol-block-propylenglykol-(1100)-vinyloxy-butylether, 10 Mol-% N,N- [3-(Acryloylamino)-propyl]-dimethylamin (V) und 5 Mol-% Acrylsäure (VI) hergestellt.

### copolymer 8

Entsprechend Copolymer 1 wurde Copolymer 8 aus 90 Mol-% 2-Acrylamido-2-methylpropansulfonsäure (I), 9,95 Mol-% [3-(Acryloylamino)-propyl]-trimethylammoniumchlorid (II), und 0,05 Mol-% Tristyrylphenol-polyethylenglykol-1100-methacrylat (IV) hergestellt. Als Molekulargewichtsregler wurden 70 ppm Ameisensäure zugegeben.

### Copolymer 9

Entsprechend Copolymer 1 wurde Copolymer 9 aus 69,93 Mol-% 2-Acrylamido-2-methylpropansulfonsäure (I), 15 Mol-% [3-(Acryloylamino)-propyl]-trimethylammoniumchlorid (II), 0,07 Mol-%, Tristyrylphenol-polyethylenglykol-1100-methacrylat (IV) und 15 Mol-% Acrylsäure (VI) hergestellt. Als Molekulargewichtsregler wurden 80 ppm Ameisensäure zugegeben.

### Vergleichsbeispiel 1

Gemäß WO 2005/035 603 A1 wurde Vergleichsbeispiel 1 aus 55 Mol-% 2-Acrylamido-2-methylpropansulfonsäure und 45 Mol-% [2-(Acryloylamino)-propyl]-trimethyl-ammoniumchlorid hergestellt.

### Vergleichsbeispiel 2

Gemäß DE 10 2004 032 304.6 wurde Vergleichsbeispiel 2 aus 47,5 Mol-% 2-Acrylamido-2-methylpropansulfonsäure, 41,3 Mol-% Acrylamid, 2,5 Mol-% Polyethylenglykol-block-propylenglykol-(790)-vinyloxy-butylether und 8,7 Mol-% [3-(Acryloylamino)-propyl]-dimethylamin hergestellt. Als Molekulargewichtsregler wurden 800 ppm Ameisensäure zugegeben.

### Vergleichsbeispiel 3

Gemäß WO 02/10229 A1 wurde das Vergleichsbeispiel 3 aus 69,0 Mol-% 2-Acrylamido-2-methylpropansulfonsäure, 26,4 Mol-% N,N-Dimethylacrylamid, 3,8 Mol-% [2-(Methacryloylamido)-propyl]-trimethylammoniumchlorid und 0,8 Mol-% Tristyrylphenol-polyethylenglykol-1100-methacrylat hergestellt.

In der Tabelle 1 sind die Zerkleinerungseigenschaften und die notwendigen Trocknungszeiten für die Copolymere angegeben, die durch Gelpolymerisation hergestellt wurden. Die Restfeuchte des gemahlenen Pulvers ist ein Maß für die Vollständigkeit des Trocknungsprozesses.

**Tabelle 1**

| | **Geleigenschaften** | **Trocknung** | | **Restfeuchte [Gew.-%]** |
|---|---|---|---|---|
| | | **Temperatur [°C]** | **Zeit [min]** | |
| Copolymer 2 | sehr harte, kleine, gut rieselfähige Teilchen | 90 | 100 | 4 |
| Copolymer 5 | sehr harte, kleine, gut rieselfähige Teilchen | 100 | 110 | 5 |
| | | | | |
| Vergleichsbeispiel 1 | sehr harte, kleine, gut rieselfähige Teilchen | 120 | 75 | 4 |
| Vergleichsbeispiel 2 | sehr harte, kleine, gut rieselfähige Teilchen | 100 | 100 | 3 |
| Vergleichsbeispiel 3 | harte, kleine, gut rieselfähige Teilchen | 100 | 100 | 4 |

In Tabelle 2 sind Lösungsviskositäten von wässrigen Lösungen angegeben.

**Tabelle 2**

| | **Viskosität 1 % ige Lsg. [mPa*s]¹⁾** |
|---|---|
| Copolymer 1 | 423 |
| Copolymer 2 | 930 |
| Copolymer 3 | 651 |
| Copolymer 4 | 128 |
| Copolymer 5 | 1715 |
| Copolymer 6 | 382 |
| Copolymer 7 | 84 |
| Copolymer 8 | 276 |
| Copolymer 9 | 181 |
| | |
| Vergleichsbeispiel 1 | 563 |
| Vergleichsbeispiel 2 | 4530 |
| Vergleichsbeispiel 3 | 3190 |

| | |
|---|---|
| ¹⁾ 20 °C, Brookfield, in H₂O (gemessen bei 5 Umdrehungen pro Minute) | |

### Anwendungsbeispiele

Die anwendungstechnische Beurteilung der erfindungsgemäßen Copolymere erfolgte anhand von Testgemischen aus dem Bereich sehr feinstoffarmer Selbstverdichtender Betone, Fließestriche und Vergussmörtel.

Die Betone wurden im Labor mit einem 50 Liter Zwangsmischer gemischt. Der Wirkungsgrad des Mischers lag bei 45 %.

Beim Mischvorgang der Selbstverdichtenden Betone wurden zunächst Zuschläge und mehlfeine Stoffe 10 Sekunden im Mischer homogenisiert, bevor anschließend das Anmachwasser, das Fließmittel und der Stabilisierer (als wässrige Lösung bzw. als Pulver) zugegeben wurden. Die Mischzeit betrug 4 Minuten. Im Anschluss wurden die Frischbetonprüfungen (Setzfließmaß, Luftporen-Gehalt) durchgeführt und bewertet. Der Konsistenzverlauf wurde über 120 Minuten beobachtet.

Für Austestungen mit Selbstverdichtendem Beton wurden folgende Prüfgeräte benutzt :
Zur Bestimmung der Fließfähigkeit wurde ein sog. Abrams-Cone Setztrichter (Innendurchmesser oben 100 mm, Innendurchmesser unten 200 mm, Höhe 300 mm) verwendet (Setzfließmaß = über zwei senkrecht zueinander stehende Achsen gemessener und gemittelter Durchmesser des Betonkuchens in cm).

Die Bestimmung des Setzfließmaßes wurde pro Mischung fünfmal durchgeführt, und zwar zu den Zeitpunkten t = 0, 30, 60, 90 und 120 Minuten nach Mischende, wobei die Mischung vor der jeweiligen Fließmaßbestimmung mit dem Betonmischer 60 Sekunden lang wieder durchgemischt wurde.

Zur Bestimmung des Luftporengehaltes wurde ein Luftporentopf (Inhalt 8 Liter) verwendet, wie er in DIN 1048 (T1) beschrieben ist.

Das Bluten (Abscheidung von Wasser an der Oberfläche des noch nicht erhärteten Baustoffs) und die Segregation der Mischungen wurden visuell beurteilt.

Die zementären Mörtel und Anhydrit-Fließestriche wurden im Labor mit einem Mörtelmischer nach DIN EN 196-1 gemischt. Auch der Mischvorgang wurde wie in DIN EN 196-1 beschrieben durchgeführt. Die Mischzeit betrug 4 min. Die Fließmaße (= Durchmesser des Ausbreitkuchens in cm) wurden mit einem in DIN EN 196 Teil 3 beschriebenen Vicat-Ring (Innendurchmesser oben = 70 mm, Innendurchmesser unten = 80 mm, Höhe = 40 mm) auf einer ebenen, trockenen Glasplatte bestimmt (die Mischung wurde vor der Fließmaßbestimmung mit dem Löffel 60 Sekunden lang wieder aufgerührt).

Kelco-Crete (Welan Gum) der Fa. CP Kelco sowie die Celluloseether Tylose H 20 P2 und Tylose MH 2000 YP2 (Produkte der Fa. SE Tylose GmbH & Co. KG, Wiesbaden), Frankfurt wurden als weitere Vergleichssubstanzen zu den erfindungsgemäßen Copolymeren eingesetzt.

### Beispiel B1: Selbstverdichtender Beton mit sehr geringem Feinkornanteil

**Tabelle 3: Rezepturen**

| Feinkornanteil 400 kg/m³ (Zement + Kalksteinmehl) | | | | | | | | | | |
|---|---|---|---|---|---|---|---|---|---|---|
| | **Ohne (Vergleich)** | **Welan Gum (Vergleich)** | **Vergleichsbeispiel 1** | **Vergleichsbeispiel 2** | **Vergleichsbeispiel 3** | **Copolymer 1** | **Copolymer 2** | **Copolymer 3** | **Copolymer 5** | **Copolymer 6** |
| CEM I 42,5 R | 350 kg/m³ | 350 kg/m³ | 350 kg/m³ | 350 kg/m³ | 350 kg/m³ | 350 kg/m³ | 350 kg/m³ | 350 kg/m³ | 350 kg/m³ | 350 kg/m³ |
| Sand (0-4 mm) | 857 kg/m³ | 857 kg/m³ | 857 kg/m³ | 857 kg/m³ | 857 kg/m³ | 857 kg/m³ | 857 kg/m³ | 857 kg/m³ | 857 kg/m³ | 857 kg/m³ |
| Kies (4-8 mm) | 311 kg/m³ | 311 kg/m³ | 311 kg/m³ | 311 kg/m³ | 311 kg/m³ | 311 kg/m³ | 311 kg/m³ | 311 kg/m³ | 311 kg/m³ | 311 kg/m³ |
| Kies (8-16 mm) | 569 kg/m³ | 569 kg/m³ | 569 kg/m³ | 569 kg/m³ | 569 kg/m³ | 569 kg/m³ | 569 kg/m³ | 569 kg/m³ | 569 kg/m³ | 569 kg/m³ |
| Kalksteinmehl | 50 kg/m³ | 50 kg/m³ | 50 kg/m³ | 50 kg/m³ | 50 kg/m³ | 50 kg/m³ | 50 kg/m³ | 50 kg/m³ | 50 kg/m³ | 50 kg/m³ |
| Melflux 2453 L | 4,2 kg/m³ | 4,2 kg/m³ | 4,2 kg/m³ | 4,2 kg/m³ | 4,2 kg/m³ | 4,2 kg/m³ | 4,2 kg/m³ | 4,2 kg/m³ | 4,2 kg/m³ | 4,2 kg/m³ |
| Stabilisierer | - | 185 g/m³ | 175 g/m^{3 2)} | 175 g/m^{3 2)} | 175 g/m^{3 2)} | 175 g/m^{3 2)} | 175 g/m^{3 2)} | 175 g/m^{3 2)} | 1.75 g/m^{3 2)} | 175 g/m^{3 2)} |
| Wasser | 200 kg/m³ | 200 kg/m³ | 200 kg/m³ | 200 kg/m³ | 200 kg/m³ | 200 kg/m³ | 200 kg/m³ | 200 kg/m³ | 200 kg/m³ | 200 kg/m³ |

| | | | | | | | | | | |
|---|---|---|---|---|---|---|---|---|---|---|
| ¹⁾ Produkt der Fa. Degussa Construction Polymers GmbH, Trostberg ²⁾ Zugabe als 1 M.-%ige wässrige Lösung des jeweiligen Copolymers (der Wassergehalt des Stabilisierers wird vom Gesamt-Anmachwasser abgezogen). | | | | | | | | | | |

**Tabelle 4: Vergleich der Beton-Eigenschaften mit konventionellen Stabilisierern und den erfindungsgemäßen Copolymeren.**

| | **Ohne (Vergleich)** | **Welan Gum (Vergleich)** | **Vergleichsbeispiel 1** | **Vergleichsbeispiel 2** | **Vergleichsbeispiel 3** | **Copolymer 1** | **Copolymer 2** | **Copolymer 3** | **Copolymer 5** | **Copolymer 6** |
|---|---|---|---|---|---|---|---|---|---|---|
| Bluten | stark | kein | stark | mittel | mittel | kein | kein | kein | kein | kein |
| Segregation | stark | kein | mittel | mittel | mittel | kein | kein | kein | kein | kein |
| Luftporengehalt nach 0 min | 1,7% | 1,9% | 2,1% | 2,0% | 2,3% | 2,1% | 2,0% | 2,2 % | 2,1% | 2,2% |
| Luftporengehalt nach 60 min | 2,3% | 2,7% | 2,2% | 2,1% | 2,3% | 2,1% | 2,2% | 2,3% | 2,2% | 2,3% |
| Luftporengehalt nach 120 min | 2,7 % | 2,3 % | 2,5 % | 2,6 % | 2,2 % | 2,3 % | 2,3 % | 2,2% | 2,3 % | 2,4% |
| Druckfestigkeit nach 1 Tag | 7,0 N/mm² | 15,2 N/mm² | 10,1 N/mm² | 13,5 N/mm² | 13,9 N/mm² | 16,1 N/mm² | 16,6 N/mm² | 15,9 N/mm² | 16,0 N/mm² | 15,2 N/mm² |
| Druckfestigkeit nach 7 Tagen | 23,1 N/mm² | 31,3 N/mm² | 26,2 N/mm¹ | 28,3 N/mm² | 29,2 N/mm² | 32,5 N/mm² | 31,4 N/mm² | 33,1 N/mm² | 30,9 N/mm² | 31,2 N/mm² |
| Druckfestigkeit nach 14 Tagen | 25,4 N/mm² | 35,3 N/mm² | 29,2 N/mm² | 31,4 N/mm² | 32,1 N/mm² | 36,1 N/mm² | 35,4 N/mm² | 36,9 N/mm² | 35,1 N/mm² | 37,2 N/mm² |
| Druckfestigkeit nach 28 Tagen | 27,2 N/mm² | 39,1 N/mm² | 32,5 N/mm² | 35,6 N/mm² | 36,5 N/mm² | 40,2 N/mm² | 40,8 N/mm² | 41,2 N/mm² | 39,7 N/mm² | 41,1 N/mm² |

**Tabelle 5: Zeitlicher Verlauf der Setzfließmaße für die in Beispiel B1 genannten Rezepturen.**

| | **Setzfließmaß nach 0 min [cm]** | **Setzfließmaß nach 30 min [cm]** | **Setzfließmaß nach 60 min [cm]** | **Setzfließmaß nach 90 min [cm]** | **Setzfließmaß nach 120 min [cm]** |
|---|---|---|---|---|---|
| Welan Gum | 67 | 64 | 63 | 60 | 58 |
| Vergleichsbeispiel 1 | 72 | 70 | 66 | 63 | 61 |
| Vergleichsbeispiel 2 | 71 | 68 | 65 | 65 | 62 |
| Vergleichsbeispiel 3 | 69 | 67 | 66 | 63 | 61 |
| Copolymer 1 | 70 | 70 | 69 | 68 | 66 |
| Copolymer 2 | 73 | 71 | 66 | 63 | 62 |
| Copolymer 3 | 72 | 71 | 70 | 69 | 68 |
| Copolymer 5 | 71 | 70 | 68 | 66 | 65 |
| Copolymer 6 | 72 | 70 | 69 | 68 | 65 |

Die Ergebnisse zeigen, dass bei Zusatz der erfindungsgemäßen Copolymere die Verarbeitbarkeit (Setzfließmaße über die Zeit) des sehr feinkornarmen Selbstverdichtenden Betons mit 400 kg/m³ Feinkornanteil erheblich verbessert und gleichzeitig ein sehr stabiler Beton erhalten wird, d.h. es tritt keine Abscheidung von Blutwasser und keine Segregation auf.

Mit den Vergleichsbeispielen 1-3 wird dagegen keine ausreichende Stabilisierung des sehr feinkornarmen Betons erreicht, d.h. es tritt Bluten und Segregation auf, was sehr nachteilig für die Festbetoneigenschaften ist. Mit Welan Gum wird zwar auch ein sehr stabiler Beton erhalten, allerdings wird durch die zu starke verdickende Wirkung des Welan Gum die Verarbeitbarkeit deutlich verschlechtert, was einen gravierenden Nachteil für den Anwender darstellt.

Die Biegezug- und Druckfestigkeiten werden durch die erfindungsgemäßen Copolymere nicht nachteilig beeinflusst.

### Beispiel B2: Selbstverdichtender Beton mit geringem Feinkornanteil

**Tabelle 6: Rezepturen**

| Feinkornanteil 350 kg/m³ (Zement + Flugasche) | | | | | | | | | |
|---|---|---|---|---|---|---|---|---|---|
| | **Ohne (Vergleich)** | **Welan Gum (Vergleich)** | **Vergleichsbeispiel 2** | **Vergleichsbeispiel 3** | **Copolymer 1** | **Copolymer 4** | **Copolymer 7** | **Copolymer 8** | **Copolymer 9** |
| CEM I 42,5 R | 300 kg/m³ | 300 kg/m³ | 300 kg/m³ | 300 kg/m³ | 300 kg/m³ | 300 kg/m³ | 300 kg/m³ | 300 kg/m³ | 300 kg/m³ |
| Sand (0-4 mm) | 883 kg/m³ | 883 kg/m³ | 883 kg/m³ | 883 kg/m³ | 883 kg/m³ | 883 kg/m³ | 883 kg/m³ | 883 kg/m³ | 883 kg/m³ |
| Kies (4-8 mm) | 320 kg/m³ | 320 kg/m³ | 320 kg/m³ | 320 kg/m³ | 320 kg/m³ | 320 kg/m³ | 320 kg/m³ | 320 kg/m³ | 320 kg/m³ |
| Kies (8-16 mm) | 587 kg/m³ | 587 kg/m³ | 587 kg/m³ | 587 kg/m³ | 587 kg/m³ | 587 kg/m³ | 587 kg/m³ | 587 kg/m³ | 587 kg/m³ |
| Flugasche | 50 kg/m³ | 50 kg/m³ | 50 kg/m³ | 50 kg/m³ | 50 kg/m³ | 50 kg/m³ | 50 kg/m³ | 50 kg/m³ | 50 kg/m³ |
| Melflux 2453 L ¹⁾ | 3,6 kg/m³ | 3,6 kg/m³ | 3,6 kg/m³ | 3,6 kg/m³ | 3,6 kg/m³ | 3,6 kg/m³ | 3,6 kg/m³ | 3,6 kg/m³ | 3,6 kg/m³ |
| Stabilisierer | - | 195 g/m³ | 180 g/m^{3 2)} | 180 g/m^{3 2)} | 180 g/m^{3 2)} | 180 g/m^{3 2)} | 180 g/m^{3 2)} | 180 g/m^{3 2)} | 180 g/m^{3 2)} |
| Wasser | 195 kg/m³ | 195 kg/m³ | 195 kg/m³ | 195 kg/m³ | 195 kg/m³ | 195 kg/m³ | 195 kg/m³ | 195 kg/m³ | 195 kg/m³ |

| | | | | | | | | | |
|---|---|---|---|---|---|---|---|---|---|
| ¹⁾ Produkt der Fa. Degussa Construction Polymers GmbH, Trostberg ²⁾ Zugabe als 1 M.-%ige wässrige Lösung des jeweiligen Copolymers (der Wassergehalt des Stabilisierers wird vom Gesamt-Anmachwasser abgezogen). | | | | | | | | | |

**Tabelle 7: Vergleich der Beton-Eigenschaften mit konventionellen Stabilisierern und den erfindungsgemäßen Copolymeren.**

| | **Ohne (Vergleich)** | **Welan Gum (Vergleich)** | **Vergleichsbeispiel 2** | **Vergleichsbeispiel 3** | **Copolymer 1** | **Copolymer 4** | **Copolymer 7** | **Copolymer 8** | **Copolymer 9** |
|---|---|---|---|---|---|---|---|---|---|
| Bluten | stark | kein | mittel | mittel | kein | kein | kein | kein | kein |
| Segregation | stark | kein | mittel - stark | mittel | kein | kein | kein | kein | kein |
| Luftporengehalt nach 0 min | 1,8 % | 2,0 % | 2,0 % | 2,0 % | 2,1 % | 2,1 % | 2,0% | 2,2 % | 2,3 % |
| Luftporengehalt nach 60 min | 2,2 % | 2,6 % | 2,2% | 2,1 % | 2,3 % | 2,4% | 2,2 % | 2,2% | 2,2 % |
| Luftporengehalt nach 120 min | 2,6% | 2,5 % | 2,7 % | 2,4 % | 2,4 % | 2,5 % | 2,3 % | 2,3 % | 2,5 % |
| Druckfestigkeit nach 1 Tag | 5,1 N/mm² | 11,0 N/mm² | 7,3 N/mm² | 8,8 N/mm² | 12,4 N/mm² | 12,7 N/mm² | 11,8 N/mm² | 10,9 N/mm² | 12,6 N/mm² |
| Druckfestigkeit nach 7 Tagen | 18,2 N/mm² | 25,9 N/mm² | 21,3 N/mm² | 23,4 N/mm² | 26,5 N/mm² | 26,8 N/mm² | 25,5 N/mm² | 26,0 N/mm² | 27,2 N/mm² |
| Druckfestigkeit nach 14 Tagen | 20,3 N/mm² | 27,2 N/mm² | 23,4 N/mm² | 25,9 N/mm² | 28,7 N/mm² | 28,1 N/mm² | 27,9 N/mm² | 28,2 N/mm² | 29,5 N/mm² |
| Druckfestigkeit nach 28 Tagen | 22,6 N/mm² | 30,8 N/mm² | 26,5 N/mm² | 29,2 N/mm² | 32,9 N/mm² | 33,7 N/mm² | 31,3 N/mm² | 32,1 N/mm² | 33,7 N/mm² |

**Tabelle 8: Zeitlicher Verlauf der Setzfließmaße für die in Beispiel B2 genannten Rezepturen.**

| | **Setzfließmaß nach 0 min [cm]** | **Setzfließmaß nach 30 min [cm]** | **Setzfließmaß nach 60 min [cm]** | **Setzfließmaß nach 90 min [cm]** | **Setzfließmaß nach 120 min [cm]** |
|---|---|---|---|---|---|
| Welan Gum | 66 | 63 | 61 | 60 | 57 |
| Vergleichsbeispiel 2 | 70 | 69 | 64 | 63 | 61 |
| Vergleichsbeispiel 3 | 69 | 67 | 65 | 62 | 60 |
| Copolymer 1 | 71 | 70 | 68 | 67 | 66 |
| Copolymer 4 | 70 | 69 | 67 | 64 | 64 |
| Copolymer 7 | 70 | 70 | 68 | 67 | 65 |
| Copolymer 8 | 69 | 69 | 68 | 67 | 66 |
| Copolymer 9 | 71 | 70 | 68 | 67 | 65 |

Bei Zusatz der erfindungsgemäßen Copolymere wird auch in dem sehr feinkornarmen Selbstverdichtenden Beton der Beispielsmischung B2 die Verarbeitbarkeit (Setzfließmaße über die Zeit) deutlich verbessert. Abscheidung von Blutwasser und Segregation treten ebenfalls nicht auf. Dagegen wird mit den Vergleichsbeispielen 1-3 keine ausreichende Stabilisierung des sehr feinkornarmen Betons mit 350 kg/m³ Feinkornanteil erreicht, da Bluten und Segregation auftreten, was wiederum sehr nachteilig für die Festbetoneigenschaften ist. Mit Welan Gum tritt wieder der Effekt auf, dass zwar ein sehr stabiler Beton erhalten wird, dessen Verarbeitbarkeit durch die zu starke verdickende Wirkung des Welan Gum aber deutlich verschlechtert wird. Dies stellt einen gravierenden Nachteil für den Anwender dar.

Die Festbetoneigenschaften (Biegezug- und Druckfestigkeiten) werden durch die erfindungsgemäßen Copolymere nicht nachteilig beeinflusst.

Die erfindungsgemäßen Copolymere wirken aber nicht nur in sehr feinstoffarmen Baustoffsystemen hervorragend als Stabilisierer, sondern sind auch in weniger feinkornarmen Baustoffsystemen hervorragend einsetzbar. Die nachfolgenden Testgemische aus dem Bereich Fließestrich und Vergussmörtel sollen dies näher erläutern

### Beispiel B3: Fließestrich auf Basis Synthese-Anhydrit

**Tabelle 9: Rezepturen**

| | **ohne Stabilisierer (Vergleich)** | **Tylose MH 2000 YP2¹⁾ (Vergleich)** | **Copolymer 1** | **Copolymer 8** |
|---|---|---|---|---|
| Synthese-Anhydrit | 350,00 g | 350,00 g | 350,00 g | 350,00 g |
| Normensand (0-2 mm) | 402,70 g | 402,40 g | 402,6 g | 402,6 g |
| Quarz-Füller | 240,00 g | 240,00 g | 240,00 g | 240,00 g |
| CEM I 42,5 R | 7,00 g | 7,00 g | 7,00 g | 7,00 g |
| Melflux 1641 F²⁾ | 0,30 g | 0,30 g | 0,30 g | 0,30 g |
| Stabilisierer | - | 0,30 g | 0,10 g | 0,10 g |
| Wasser | 170,00 g | 170,00 g | 170,00 g | 170,00 g |

| | | | | |
|---|---|---|---|---|
| ¹⁾ Produkt der Fa. SE Tylose GmbH & Co. KG, Wiesbaden ²⁾ Produkt der Fa. Degussa Construction Polymers GmbH, Trostberg | | | | |

**Tabelle 10: Vergleich der Fließestrich-Eigenschaften für die in Beispiel B3 genannten Rezepturen.**

| | **ohne Stabilisierer (Vergleich)** | **Tylose MH 2000 YP2¹⁾ (Vergleich)** | **Copolymer 1** | **Copolymer 8** |
|---|---|---|---|---|
| Bluten | stark | kein | kein | kein |
| Segregation | stark | kein | kein | kein |

**Tabelle 11: Zeitlicher Verlauf der Fließmaße für die in Beispiel B3 genannten Rezepturen.**

| | **Fließmaß nach 0 min [cm]** | **Fließmaß nach 15 min [cm]** | **Fließmaß nach 30 min [cm]** | **Fließmaß nach 45 min [cm]** | **Fließmaß nach 60 min [cm]** |
|---|---|---|---|---|---|
| Tylose MH 2000 YP2 | 23,3 | 22,1 | 19,5 | 18,8 | 17,7 |
| Copolymer 1 | 23,0 | 22,3 | 21,8 | 21,3 | 20,3 |
| Copolymer 8 | 22,8 | 22,1 | 21,9 | 21,1 | 20,1 |

Wie die Ergebnisse in Tabelle 10 und 11 zeigen, wird bei Zusatz der erfindungsgemäßen Copolymere eine sehr stabile Baustoffmischung erhalten (kein Bluten, keine Segregation) und die Verarbeitbarkeit gegenüber dem Vergleichsbeispiel deutlich verbessert (geringerer Abfall der Fließmaße über die Zeit). Zudem müssen die erfindungsgemäßen Copolymere nur in einer deutlich niedrigeren Dosierung zugesetzt werden.

### Beispiel B4: Vergussmörtel:

Die Zusammensetzung des Vergussmörtels ist aus Tabelle 12 zu entnehmen.

**Tabelle 12: Zusammensetzung der Testmischung (in Gew.-%)**

| **Komponente** | **Menge** |
|---|---|
| Portlandzement¹⁾ | 30,75 |
| Normensand (0-2 mm)²⁾ | 65,33 |
| EFA-Füller³⁾ | 2,31 |
| CSA20⁴⁾ | 1,37 |
| Zement/AL-Pulver (995/5)⁵⁾ | 0,08 |
| Melflux 1641 F ⁶⁾ | 0,15 |
| Stabilisierer⁷⁾ | 0,01 |

| | |
|---|---|
| ¹⁾ CEM I 52,5 R ²⁾ gemäß DIN EN 196-1 ³⁾ Produkt der Fa. Bau Mineral, Herten ⁴⁾ Calciumsulfoaluminat, Produkt der Fa. Denka, Japan ⁵⁾ Mischung aus 995 Gewichtsteilen CEM I 52,5 R und 5 Gewichtsteilen Al-Pulver (Standard SK I, Produkt der Fa. Eckart, Fürth) ⁶⁾ Produkt der Fa. Degussa Construction Polymers GmbH, Trostberg ⁷⁾ erfindungsgemäßes Copolymer bzw. Vergleichsbeispiel | |

**Tabelle 13: Vergleich der Mörtel-Eigenschaften mit den erfindungsgemäßen Copolymeren und Vergleichsbeispielen.**

| Vergussmörtel-Trockenmischung: 1.000 g | | | | | |
|---|---|---|---|---|---|
| Wassermenge: 100 g | | | | | |
| **Zusatzmittel** | **Bluten** | **Segregation** | **Fließmaß** | | |
| | | | **nach 5 min [cm]** | **nach 30 min [cm]** | **nach 60 min [cm]** |
| Copolymer 2 | kein | kein | 28,9 | 27,2 | 26,0 |
| Copolymer 4 | kein | kein | 28,2 | 26,9 | 25,2 |
| Copolymer 6¹⁾ | kein | kein | 27,0 | 26,5 | 24,7 |
| | | | | | |
| Tylose H 20 P2 (Vergleich) ²⁾ | kein | kein | 27,3 | 25,4 | 23,2 |

| | | | | | |
|---|---|---|---|---|---|
| ¹⁾ Dosierung 0,005 Gew.-% ²⁾ Dosierung 0,04 Gew.-% | | | | | |

Die Testergebnisse in Tabelle 13 zeigen, dass die erfindungsgemäßen Copolymere sehr gute Fließmaße des Vergussmörtels (auch über die Zeit) sowie eine effektive Verhinderung von Bluten und Segregation ermöglichen. Die erfindungsgemäßen Copolymere wirken als Stabilisierer hervorragend mit dem Polycarboxylatether-Fließmittel (Melflux 1641 F) zusammen und gewährleisten eine für den Anwender optimale Verarbeitbarkeit des Vergussmörtels. Gegenüber dem handelsüblichen Stabilisierer (Tylose H 20 P2) werden sogar höhere Fließmaße über die Zeit erhalten, ohne dass Bluten und Segregation auftreten. Zudem müssen die erfindungsgemäßen Copolymere nur in einer deutlich niedrigeren Dosierung zugesetzt werden.

## Patentansprüche

1. Wasserlösliche sulfogruppenhaltige Copolymere bestehend aus
a) 40 bis 93,89 Mol-% Baugruppen der Formel (I) 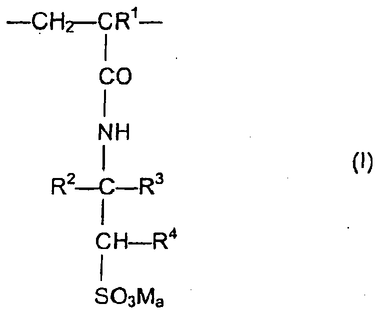 mit
R¹ = Wasserstoff oder Methyl,
R², R³, R⁴ = Wasserstoff, aliphatischer Kohlenwasserstoffrest mit 1 bis 6 C-Atomen, ggf. mit Methylgruppen substituierter Phenylrest und
M = Wasserstoff, ein- oder zweiwertiges Metallkation, Ammonium bzw. ein organischer Aminrest sowie
a = ½ oder 1,
b) 6 bis 59,89 Mol-% Baugruppen der Formel (II) 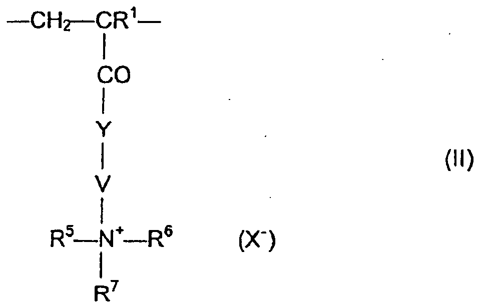 worin
Y = O, NH oder NR⁵,
V = -(CH₂)ₓ-, 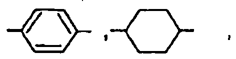
R⁵ und R⁶ unabhängig voneinander einen aliphatischen Kohlenwasserstoffrest mit 1 bis 20 C-Atomen, einen cycloaliphatischen Kohlenwasserstoffrest mit 5 bis 8 C-Atomen oder einen Arylrest mit 6 bis 14 C-Atomen bedeuten, wobei diese Reste ggf. mit Hydroxyl-, Carboxyl- oder Sulfonsäuregruppen substituiert sein können,
R⁷ = R⁵ oder R⁶, -(CH₂)ₓ-SO₃Mₐ, 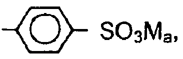 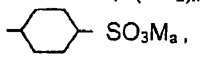
x = 1 bis 6,
X = F, Cl, Br, I, C₁- bis C₄-Alkylsulfat oder C₁- bis C₄-Alkylsulfonat darstellen und
R¹, M und a oben genannte Bedeutung besitzen,
c) 0,1 bis 10 Mol-% Baugruppen der Formel (III) 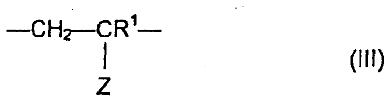 wobei
Z = -(CH₂)_{q}-O(CₙH₂ₙO)ₚ-R⁸, -COO(CₙH₂ₙO)ₚ-R⁸
n = 2 bis 4
p = 1 bis 200
q = 0 bis 20
R⁸ = H, C₁- bis C₄-Alkyl-Reste darstellen sowie
R¹ die oben genannte Bedeutung besitzt,
und/oder
d) 0,01 bis 0,5 Mol-% Baugruppen der Formel (IV) 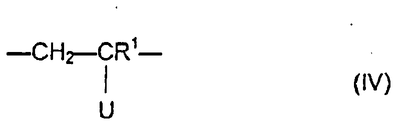 worin
U = -COO(CₙH₂ₙO)ₚ-R⁹, -(CH₂)_{q}-O(CₙH₂ₙO)ₚ-R⁹
R⁹ = 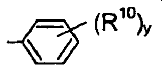 sowie ungesättigter oder gesättigter, linearer oder verzweigter aliphatischer Alkylrest mit 10 bis 30 C-Atomen,
R¹⁰ = H, C₁- bis C₆-Alkyl-, Arylalkylgruppe mit C₁- bis C₁₂-Alkyl- und C₆- bis C₁₄-Arylrest darstellen,
y = 1 bis 3 sowie
R¹, n, p und q die oben genannte Bedeutung besitzen.

2. Copolymere nach Anspruch 1, **dadurch gekennzeichnet, dass** das ein-oder zweiwertige Metallkation aus Natrium-, Kalium-, Calcium- oder Magnesiumionen besteht.

3. Copolymere nach Anspruch 1 oder 2, **dadurch gekennzeichnet, dass** die organischen Aminreste vorzugsweise substituierte Ammoniumgruppen darstellen, die sich ableiten von primären, sekundären und tertiären C₁-bis C₂₀-Alkylaminen, C₁- bis C₂₀-Alkanolaminen, C₅- bis C₈-Cycloalkylaminen und C₆- bis C₁₄-Arylaminen.

4. Copolymere nach einem der Ansprüche 1 bis 3, **dadurch gekennzeichnet, dass** sie aus 50 bis 89,67 Mol-% der Baugruppe a), 10 bis 45 Mol-% der Baugruppe b), 0,3 bis 5 Mol-% der Baugruppe c) und/oder 0,03 bis 0,4 Mol-% der Baugruppe d) bestehen.

5. Copolymere nach einem der Ansprüche 1 bis 4, **dadurch gekennzeichnet, dass** sie ein zahlenmittleres Molekulargewicht von 50.000 bis 10.000.000 g/Mol besitzen.

6. Copolymere nach einem der Ansprüche 1 bis 5, **dadurch gekennzeichnet, dass** bis zu 30 Mol-% der Baugruppe a) durch weitere Sulfonsäuregruppen-haltige Struktureinheiten ersetzt sind, die sich von Methallylsulfonsäure- oder Allylsulfonsäure-Monomeren ableiten.

7. Copolymere nach einem der Ansprüche 1 bis 6, **dadurch gekennzeichnet, dass** die Verbindungen bestehend aus den Baugruppen a), b), c) und/oder d) noch bis zu 20 Mol-%, insbesondere bis zu 15 Mol-%, bezogen auf die Summe der Baugruppen a), b), c) und/oder d) noch eine weitere Baugruppe e) auf Basis der Formel (V) enthalten 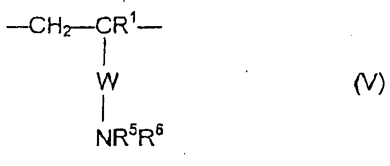 worin
W = -CO-O-(CH₂)ₘ-, -CO-NR²-(CH₂)ₘ-
m = 1 bis 6 darstellen und
R¹, R², R⁵ und R⁶ die oben genannte Bedeutung besitzen.

8. Copolymere nach einem der Ansprüche 1 bis 7, **dadurch gekennzeichnet, dass** bis zu 30 Mol-% der Baugruppe a) durch ein Monomer f) der allgemeinen Formel (VI) ersetzt sind 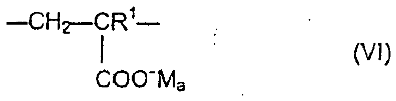 worin
R¹, M und a die oben genannte Bedeutung besitzen.

9. Copolymere nach einem der Ansprüche 1 bis 8, **dadurch gekennzeichnet, dass** bis zu 5 Mol-% der Baugruppen b) durch weitere kationische Struktureinheiten ersetzt sind, die sich von N,N-Dimethyldiallyl-ammoniumchlorid und N,N-Diethyldiallyl-ammoniumchlorid ableiten.

10. Copolymere nach einem der Ansprüche 1 bis 9, **dadurch gekennzeichnet, dass** dass sie noch bis zu 0,1 Mol-% bezogen auf die Summen der Baugruppen a), b), c) und/oder d) sowie ggf. e) und f) einer Vernetzer-Komponente ausgewählt aus der Gruppe Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat enthalten.

11. Verfahren zur Herstellung der Copolymere nach den Ansprüchen 1 bis 10, **dadurch gekennzeichnet, dass** die die Strukturen a), b), c) und/oder d) sowie ggf. e) und f) bildenden Monomere durch radikalische, ionische oder komplex koordinative Substanz-, Lösungs-, Gel-, Emulsions-, Dispersions- oder Suspensionspolymerisation umgesetzt werden.

12. Verfahren nach Anspruch 11, **dadurch gekennzeichnet, dass** die Copolymere durch Gelpolymerisation oder Lösungsmittelpolymerisation in wässriger Phase in Gegenwart von Initiatoren und ggf. sonstigen Hilfsmitteln wie z. B. Molekulargewichtsreglern hergestellt werden.

13. Verfahren nach Anspruch 12, **dadurch gekennzeichnet, dass** die Gelpolymerisation bei - 5 bis 50 °C und einer Konzentration der wässrigen Lösung von 35 bis 65 Gew.-% erfolgt.

14. Verfahren nach Anspruch 12, **dadurch gekennzeichnet, dass** die Lösungspolymerisation bei 10 bis 100 °C und einer Konzentration der wässrigen Lösung von 5 bis 30 Gew.-% durchgeführt wird.

15. Verwendung der Copolymere nach den Ansprüchen 1 bis 10 als Zusatzmittel in wässrigen Baustoffsystemen auf der Basis hydraulischer Bindemittel wie Zement, Kalk, Gips und Anhydrit sowie in wasserbasierenden Anstrich- und Beschichtungssystemen.

16. Verwendung nach Anspruch 15, **dadurch gekennzeichnet, dass** die Copolymere als Stabilisierer, Rheologiemodifizierer und Wasserretentionsmittel eingesetzt werden.

17. Verwendung nach Anspruch 15 oder 16, **dadurch gekennzeichnet, dass** die Copolymere in einer Menge von 0,005 bis 3 Gew.-%, bezogen auf das Trockengewicht des Baustoff-, Anstrich- oder Beschichtungssystems eingesetzt werden.

## Claims

1. A water-soluble sulfo group-containing copolymer consisting of
a) 40 to 93.89 mol% of structural groups of the formula (I) 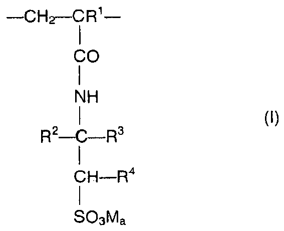 where
R¹ = hydrogen or methyl,
R², R³, R⁴ = hydrogen, an aliphatic hydrocarbon radical having 1 to 6 C atoms, a phenyl radical optionally substituted by methyl groups and
M = hydrogen, a mono- or divalent metal cation, ammonium or an organic amine radical and
a = ½ or 1,
b) 6 to 59.89 mol% of structural groups of the formula (II) 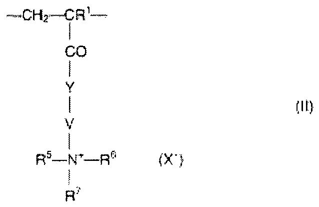 in which
Y = O, NH or NR⁵,
V = - (CH₂)ₓ-, 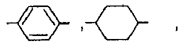
R⁵ and R⁶ independently of one another are an aliphatic hydrocarbon radical having 1 to 20 C atoms, a cycloaliphatic hydrocarbon radical having 5 to 8 C atoms or an aryl radical having 6 to 14 C atoms, where these radicals can optionally be substituted by hydroxyl, carboxyl or sulfonic acid groups,
R⁷ = R⁵ or R⁶, -(CH₂)ₓ-SO₃Mₐ, 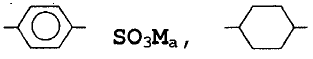 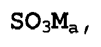
X = 1 to 6,
X = F, Cl, Br, I, C₁- to C₄ alkylsulfate or C₁ to C₄- alkylsulfonate and
R¹, M and a have the abovementioned meaning,
c) 0.1 to 10 mol% of structural groups of the formula (III) 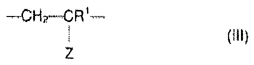 where
z = - (CH₂)_{q}-O (CₙH₂ₙO)ₚ-R⁸, -COO(CₙH₂ₙO)ₚ-R⁸
n = 2 to 4
p = 1 to 200
q = 0 to 20
R⁸ = H, C₁- to C₄-alkyl radicals and
R¹ has the abovementioned meaning,
**and/or**
d) 0.01 to 0.5 mol% of structural groups of the formula (IV) 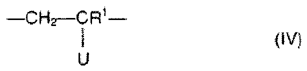 in which
U = -COO(CₙH₂ₙO)ₚ-R⁹, - (CH₂)_{q}-O(CₙH₂ₙO)ₚ-R⁹
R⁹ = 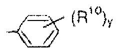 or an unsaturated or saturated, linear or branched aliphatic alkyl radical having 10 to 30 C atoms,
R¹⁰ = H, a C₁- to C₆-alkyl or arylalkyl group having a C₁- to C₁₂-alkyl and C₆- to C₁₄-aryl radical,
y = 1 to 3 and
R¹, n, p and q have the abovementioned meaning.

2. A copolymer as claimed in claim 1, wherein the mono- or divalent metal cation consists of sodium, potassium, calcium or magnesium ions.

3. A copolymer as claimed in claim 1 or 2, wherein the organic amine radicals are preferably substituted ammonium groups which are derived from primary, secondary and tertiary **C₁-** to C₂₀-alkylamines, **C₁-** to **C₂₀-** alkanolamines, C₅- to C₈-cycloalkylamines and C₆- to C₁₄-arylamines.

4. A copolymer as claimed in one of claims 1 to 3, which consists of 50 to 89.67 mol% of structural group a), 10 to 45 mol% of structural group b), 0.3 to 5 mol% of structural group c) and/or 0.03 to 0.4 mol% of structural group d).

5. A copolymer as claimed in one of claims 1 to 4, which possesses a number average molecular weight of 50 000 to 10 000 000 g/mol.

6. A copolymer as claimed in one of claims 1 to 5, wherein up to 30 mol% of structural group a) are replaced by further sulfonic acid group-containing structural units which are derived from methallylsulfonic acid or allylsulfonic acid monomers.

7. A copolymer as claimed in one of claims 1 to 6, wherein the compounds consisting of the structural groups a), b), c) and/or d) additionally contain up to 20 mol%, in particular up to 15 mol%, based on the sum of the structural groups a), b), c) and/or d), of an additional further structural group e) based on the formula (V) 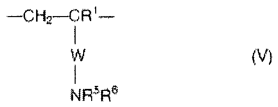 in which
W = -CO-O-(CH₂)ₘ-, -CO-NR²-(CH₂)ₘ-
m = 1 to 6 and
R¹, R², R⁵ and R⁶ have the abovementioned meaning.

8. A copolymer as claimed in one of claims 1 to 7, wherein up to 30 mol% of structural group a) are replaced by a monomer f) of the general formula **(VI)** 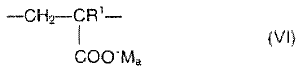 in which
R¹, M and a have the abovementioned meaning.

9. A copolymer as claimed in one of claims 1 to 8, wherein up to 5 mol% of the structural groups b) are replaced by further cationic structural units which are derived from N,N-dimethyldiallylammonium chloride and N,N- diethyldiallylammonium chloride.

10. A copolymer as claimed in one of claims 1 to 9, which additionally contains up to 0.1 mol% based on the sums of the structural groups a), b), c) and/or d) and optionally e) and f) of a crosslinker component selected from the group consisting of triallylamine, triallylmethylammonium chloride, tetraallylammonium chloride, N,N'-methylenebisacrylamide, triethylene glycol bismethacrylate, triethylene glycol bisacrylate, polyethylene glycol(400) bismethacrylate and polyethylene glycol(400) bisacrylate.

11. A process for the preparation of the copolymers as claimed in claims 1 to 10, wherein the monomers forming the structures a), b), c) and/or d) and optionally e) and f) are reacted by free-radical, ionic or complex coordinative bulk, solution, gel, emulsion, dispersion or suspension polymerization.

12. The process as claimed in claim 11, wherein the copolymers are prepared by gel polymerization or solution polymerization in aqueous phase in the presence of initiators and optionally other auxiliaries such as, for example, chain transfer agents.

13. The process as claimed in claim 12, wherein the gel polymerization is carried out at - 5 to 50°C and a concentration of the aqueous solution of 35 to 65 w.-%.

14. The process as claimed in claim 12, wherein the solution polymerization is carried out at 10 to 100°C and a concentration of the aqueous solution of 5 to 30 w.-%.

15. The use of the copolymers as claimed in claims 1 to 10 as additives in aqueous building material systems based on hydraulic binders such as cement, lime, gypsum and anhydrite, and in water-based painting and coating systems.

16. The use as claimed in claim 15, wherein the copolymers are used as stabilizers, rheology modifiers and water retention agents.

17. The use as claimed in claim 15 or 16, wherein the copolymers are employed in an amount from 0.005 to 3 w.-%, based on the dry weight of the building material, painting or coating system.

## Revendications

1. Copolymères contenant des groupes sulfo solubles dans l'eau, constitués par :
a) 40 à 93,89 % en moles de groupes constitutifs de formule (I) 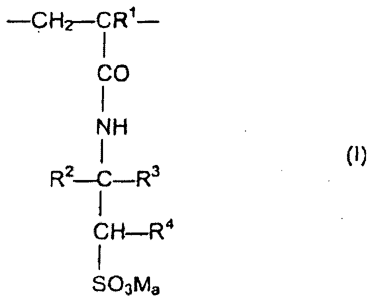 avec
R¹ = hydrogène ou méthyle,
R², R³, R⁴ = hydrogène, radical hydrocarboné aliphatique de 1 à 6 atomes C, radical phényle éventuellement substitué avec des groupes méthyle, et
M = hydrogène, cation métallique mono- ou bivalent, ammonium ou radical amino organique, et
a = ½ ou 1,
b) 6 à 59,89 % en moles de groupes constitutifs de formule (II) 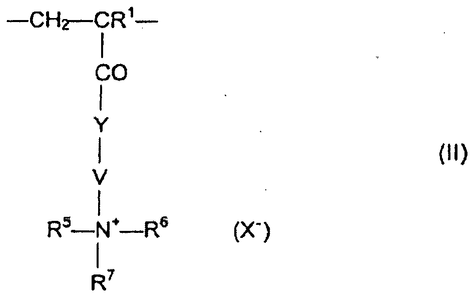 dans laquelle
Y = O, NH ou NR⁵,
V = - (CH₂)ₓ-, 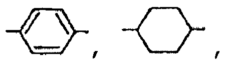
R⁵ et R⁶ signifient indépendamment l'un de l'autre un radical hydrocarboné aliphatique de 1 à 20 atomes C, un radical hydrocarboné cycloaliphatique de 5 à 8 atomes C ou un radical aryle de 6 à 14 atomes C, ces radicaux pouvant éventuellement être substitués avec des groupes hydroxyle, carboxyle ou acide sulfonique,
R⁷ = R⁵ ou R⁶, -(CH₂)ₓ-SO₃Mₐ, 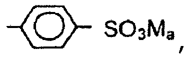 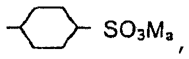
x = 1 à 6,
X = F, Cl, Br, I, alkylsulfate en C₁ à C₄ ou alkylsulfonate en C₁ à C₄, et
R¹, M et a ont la signification indiquée précédemment,
c) 0,1 à 10 % en moles de groupes constitutifs de formule (III) 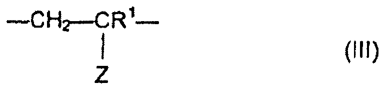 dans laquelle
Z = -(CH₂)_{q}-O(CₙH₂ₙO)ₚ-R⁸, -COO(CₙH₂ₙO)ₚ-R⁸,
n = 2 à 4,
p = 1 à 200,
q = 0 à 20,
R⁸ = H, radicaux alkyle en C₁ à C₄, et
R¹ a la signification indiquée précédemment,
et/ou
d) 0,01 à 0,5 % en moles de groupes constitutifs de formule (IV) 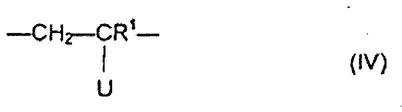 dans laquelle
U = -COO(CₙH₂ₙO)ₚ-R⁹, -(CH₂)_{q}-O(CₙH₂ₙO)ₚ-R⁹,
R⁹ = 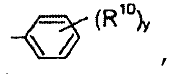 ainsi qu'un radical alkyle aliphatique insaturé ou saturé, linéaire ou ramifié, de 10 à 30 atomes C,
R¹⁰ = H, groupe alkyle en C₁ à C₆, groupe arylalkyle contenant un radical alkyle en C₁ à C₁₂ et un radical aryle en C₆ à C₁₄,
y = 1 à 3, et
R¹, n, p et q ont la signification indiquée précédemment.

2. Copolymères selon la revendication 1, **caractérisés en ce que** le cation métallique mono- ou bivalent est constitué par des ions sodium, potassium, calcium ou magnésium.

3. Copolymères selon la revendication 1 ou 2, **caractérisés en ce que** les radicaux amino organiques sont de préférence des groupes ammonium substitués qui dérivent d'alkylamines en C₁ à C₂₀, d'alcanolamines en C₁ à C₂₀, de cycloalkylamines en C₅ à C₈ et d'arylamines en C₆ à C₁₄ primaires, secondaires et tertiaires.

4. Copolymères selon l'une quelconque des revendications 1 à 3, **caractérisés en ce qu'**ils sont constitués de 50 à 89,67 % en moles du groupe constitutif a), 10 à 45 % en moles du groupe constitutif b), 0,3 à 5 % en moles du groupe constitutif c) et/ou 0,03 à 0,4 % en moles du groupe constitutif d).

5. Copolymères selon l'une quelconque des revendications 1 à 4, **caractérisés en ce qu'**ils présentent un poids moléculaire moyen en nombre de 50 000 à 10 000 000 g/mol.

6. Copolymères selon l'une quelconque des revendications 1 à 5, **caractérisés en ce que** jusqu'à 30 % en moles des groupes constitutifs a) sont remplacés par d'autres unités structurales contenant des groupes acide sulfonique, qui dérivent de monomères de l'acide méthallylsulfonique ou de l'acide allylsulfonique.

7. Copolymères selon l'une quelconque des revendications 1 à 6, **caractérisés en ce que** les composés constitués des groupes constitutifs a), b), c) et/ou d) contiennent encore jusqu'à 20 % en moles, notamment jusqu'à 15 % en moles, par rapport à la somme des groupes constitutifs a), b), c) et/ou d) d'un groupe constitutif supplémentaire e) à base de la formule (V) 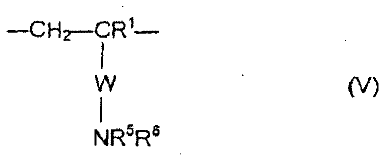 dans laquelle
W = -CO-O- (CH₂)ₘ-, -CO-NR²- (CH₂)ₘ-,
m = 1 à 6 et
R¹, R², R⁵ et R⁶ ont la signification indiquée précédemment.

8. Copolymères selon l'une quelconque des revendications 1 à 7, **caractérisés en ce que** jusqu'à 30 % en moles des groupes constitutifs a) sont remplacés par un monomère f) de formule générale (VI) 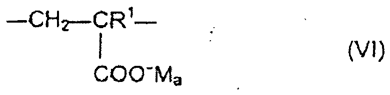 dans laquelle
R¹, M et a ont la signification indiquée précédemment.

9. Copolymères selon l'une quelconque des revendications 1 à 8, **caractérisés en ce que** jusqu'à 5 % en moles des groupes constitutifs b) sont remplacés par d'autres unités structurales cationiques, qui dérivent de chlorure de N,N-diméthyldiallyl-ammonium et de chlorure de N,N-diéthyldiallyl-ammonium.

10. Copolymères selon l'une quelconque des revendications 1 à 9, **caractérisés en ce qu'**ils contiennent encore jusqu'à 0,1 % en moles, par rapport à la somme des groupes constitutifs a), b), c) et/ou d), ainsi qu'éventuellement e) et f), d'un composant agent de réticulation choisi dans le groupe constitué par la triallylamine, le chlorure de triallylméthyl-ammonium, le chlorure de tétrallyl-ammonium, le N,N'-méthylène-bisacrylamide, le bisméthacrylate de triéthylène glycol, le bisacrylate de triéthylène glycol, le bisméthacrylate de polyéthylène glycol (400) et le bisacrylate de polyéthylène glycol (400).

11. Procédé de fabrication des copolymères selon les revendications 1 à 10, **caractérisé en ce que** les monomères formant les structures a), b), c) et/ou d), ainsi qu'éventuellement e) et f), sont mis en réaction par polymérisation en substance, en solution, en gel, en émulsion, en dispersion ou en suspension, radicalaire, ionique ou coordinative par complexes.

12. Procédé selon la revendication 11, **caractérisé en ce que** les copolymères sont fabriqués par polymérisation en gel ou polymérisation en solvant dans une phase aqueuse en présence d'initiateurs et éventuellement d'autres adjuvants tels que p. ex. des régulateurs du poids moléculaire.

13. Procédé selon la revendication 12, **caractérisé en ce que** la polymérisation en gel a lieu à une température de -5 à 50 °C et à une concentration de la solution aqueuse de 35 à 65 % en poids.

14. Procédé selon la revendication 12, **caractérisé en ce que** la polymérisation en solution a lieu à une température de 10 à 100 °C et à une concentration de la solution aqueuse de 5 à 30 % en poids.

15. Utilisation des copolymères selon les revendications 1 à 10 en tant qu'additifs dans des systèmes de matériaux de construction aqueux à base de liants hydrauliques tels que le ciment, la chaux, le gypse et l'anhydrite, ainsi que dans des systèmes de peintures et de revêtements à base d'eau.

16. Utilisation selon la revendication 15, **caractérisée en ce que** les copolymères sont utilisés en tant que stabilisateurs, modificateurs de rhéologie et agents de rétention de l'eau.

17. Utilisation selon la revendication 15 ou 16, **caractérisée en ce que** les copolymères sont utilisés en une quantité de 0,005 à 3 % en poids, par rapport au poids sec du système de matériau de construction, de peinture ou de revêtement.
